# EUROPÄISCHE PATENTSCHRIFT

(11) **EP 2 884 063 B1**
(45) Veröffentlichungstag und Bekanntmachung des Hinweises auf die Patenterteilung: **15.02.2017**
(21) Anmeldenummer: 14197228.1
(22) Anmeldetag: 10.12.2014
(51) Int. Cl.: F01N 1/06, F01N 13/18, F16L 55/033, B60K 13/04

(54) **SCHALLERZEUGER FÜR EIN SYSTEM ZUR BEEINFLUSSUNG VON ABGASGERÄUSCHEN EINES KRAFTFAHRZEUGS**
SOUND GENERATOR FOR A SYSTEM FOR INFLUENCING EXHAUST NOISE OF A MOTOR VEHICLE
GÉNÉRATEUR ACOUSTIQUE D'UN SYSTÈME AGISSANT SUR LES BRUITS DE GAZ D'ÉCHAPPEMENT D'UN VÉHICULE AUTOMOBILE

(30) Priorität: 10.12.2013 DE 102013113803
(43) Veröffentlichungstag der Anmeldung: 17.06.2015
(73) Patentinhaber: Eberspächer Exhaust Technology GmbH & Co. KG, 66539 Neunkirchen (DE)
(72) Erfinder: Nording, Thomas, 73734 Esslingen (DE); Schlicht, Thomas, 73730 Esslingen (DE); Klausa, Konrad, 73779 Deizisau (DE); Sauter, Frank, 70771 Leinfelden-Echterdingen (DE)
(74) Vertreter: Diehl & Partner GbR

(56) Entgegenhaltungen:
- DE-A1-102009 049 280
- DE-A1-102012 201 725

## Beschreibung

Die Erfindung betrifft einen Schallerzeuger für ein System zur Beeinflussung von in Abgasanlagen von verbrennungsmotorisch betriebenen Fahrzeugen geführten Schallwellen.

Unabhängig von der Bauform eines Verbrennungsmotors (beispielsweise Hubkolbenmotor, Rotationskolbenmotor oder Freikolbenmotor) werden infolge der hintereinander ablaufenden Arbeitstakte (insbesondere Ansaugen und Verdichten eines Kraftstoff-Luftgemischs, Arbeiten und Ausstoßen des verbrannten Kraftstoff-Luftgemischs) Geräusche erzeugt. Diese durchlaufen zum einen als Körperschall den Verbrennungsmotor und werden außen am Verbrennungsmotor als Luftschall abgestrahlt. Zum anderen durchlaufen die Geräusche als Luftschall zusammen mit dem verbrannten Kraftstoff-Luftgemisch eine mit dem Verbrennungsmotor in Fluidverbindung stehende Abgasanlage. Die als Luftschall die Abgasanlage durchlaufenden Geräusche werden Abgasgeräusche genannt.

Diese Geräusche werden häufig als nachteilig empfunden. Zum einen gibt es gesetzliche Vorgaben zum Lärmschutz, die von Herstellern von verbrennungsmotorisch betriebenen Fahrzeugen einzuhalten sind. Diese gesetzlichen Vorgaben geben in der Regel einen im Betrieb des Fahrzeugs maximal zulässigen Schalldruck vor. Zum anderen versuchen Hersteller, den von ihnen hergestellten verbrennungsmotorisch betriebenen Fahrzeugen eine charakteristische Geräuschentwicklung aufzuprägen, welche zum Image des jeweiligen Herstellers passen und die Kunden ansprechen soll. Diese charakteristische Geräuschentwicklung lässt sich bei modernen Motoren mit geringem Hubraum häufig nicht mehr auf natürlichem Wege sicherstellen.

Die den Verbrennungsmotor als Körperschall durchlaufenden Geräusche lassen sich gut dämmen und stellen daher in der Regel kein Problem hinsichtlich des Lärmschutzes dar.

Die eine Abgasanlage des Verbrennungsmotors zusammen mit dem verbrannten Kraftstoff-Luftgemisch als Luftschall durchlaufenden Abgasgeräusche werden durch vor der Mündung der Abgasanlage angeordnete Schalldämpfer reduziert, welche ggf. vorhandenen Katalysatoren nachgeschaltet sind. Derartige Schalldämpfer können beispielsweise nach dem Absorptions- und/oder Reflexionsprinzip arbeiten. Beide Arbeitsweisen weisen den Nachteil auf, dass sie ein vergleichsweise großes Volumen beanspruchen und dem verbrannten Kraftstoff-Luftgemisch einen relativ hohen Widerstand entgegen setzen, wodurch der Gesamtwirkungsgrad des Fahrzeuges sinkt und der Kraftstoffverbrauch steigt.

Als Alternative oder zur Ergänzung von Schalldämpfern werden seit einiger Zeit sogenannte Antischall-Systeme entwickelt, die dem vom Verbrennungsmotor erzeugten und in der Abgasanlage geführten Luftschall einen elektroakustisch erzeugten Anti-Schall überlagern. Derartige Antischall-Systeme verwenden üblicherweise einen sogenannten *Filtered-x Least mean squares* (FxLMS) Algorithmus, der versucht, den in der Abgasanlage geführten Luftschall durch Ausgabe von Schall über wenigstens einen mit der Abgasanlage in Fluidverbindung stehenden Lautsprecher auf Null (im Falle der Schallauslöschung) oder einen vorgegebenen Schwellwert (im Falle der Schallbeeinflussung) zu regeln. Zum Erzielen einer vollständigen destruktiven Interferenz der Schallwellen des in der Abgasanlage geführten Luftschalls und des vom Lautsprecher erzeugten Anti-Schalls müssen die vom Lautsprecher herrührenden Schallwellen nach Amplitude und Frequenz den in der Abgasanlage geführten Schallwellen entsprechen, relativ zu diesen jedoch eine Phasenverschiebung von 180 Grad aufweisen. Entsprechen sich die in der Abgasanlage geführten Schallwellen des Luftschalls und die vom Lautsprecher erzeugten Schallwellen des Anti-Schalls zwar in der Frequenz, und weisen sie relativ zueinander eine Phasenverschiebung von 180 Grad auf, entsprechen sich die Schallwellen aber nicht in der Amplitude, kommt es nur zu einer Abschwächung der in der Abgasanlage geführten Schallwellen des Luftschalls. Für jedes Frequenzband des in der Abgasanlage geführten Luftschalls wird der Anti-Schall mittels des FxLMS-Algorithmus gesondert berechnet, indem eine geeignete Frequenz und Phasenlage von zwei zueinander um 90 Grad verschobenen Sinusschwingungen bestimmt wird, und die erforderlichen Amplituden für diese Sinusschwingungen berechnet werden. Das Ziel von Antischall-Systemen ist es, dass die Schallauslöschung bzw. Schallbeeinflussung zumindest außerhalb, ggf. aber auch innerhalb der Abgasanlage hörbar und messbar ist.

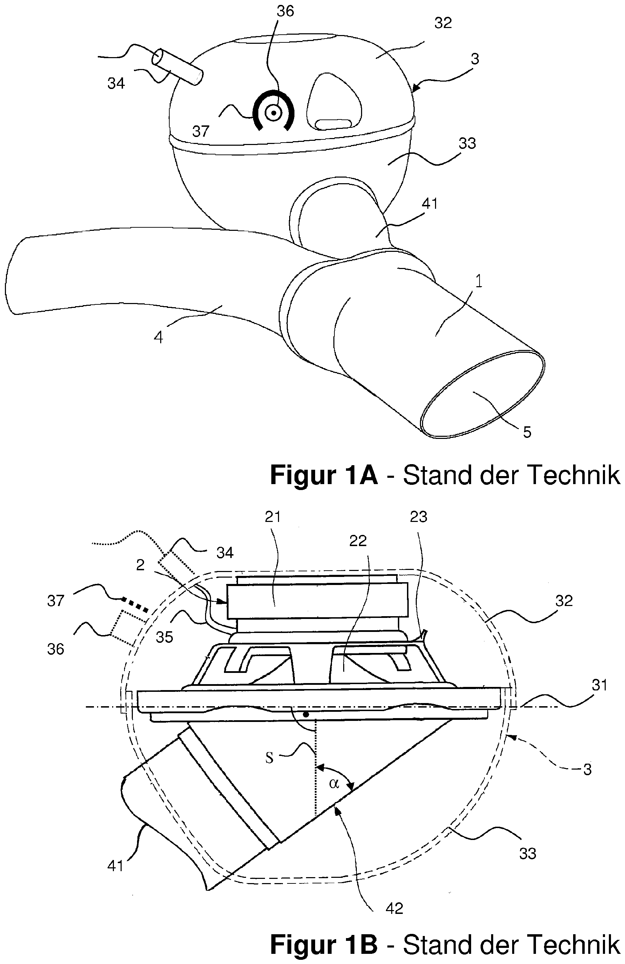

Ein System zur Beeinflussung von in einer Abgasanlage eines verbrennungsmotorisch betriebenen Fahrzeugs geführten Schallwellen wird im Folgenden anhand der Figuren 1A und 1B beschrieben.

Der in Figur 1A in schematischer Perspektivansicht gezeigte Schallerzeuger 3 des Systems weist ein festes Gehäuse auf, welches zweiteilig aus einer Oberschale 32 und einer Unterschale 33 aufgebaut ist, die miteinander luftdicht verbunden sind. Das Gehäuse nimmt einen elektrodynamischen Lautsprecher 2 auf und ist über ein Y-Stück 1 an eine Abgasanlage 4 angebunden. Das Y-Stück 1 weist am Fuß des "Y" eine Mündung 5 auf, um in der Abgasanlage 4 geführtes Abgas und von dem Lautsprecher 2 erzeugten Schall nach außen abzugeben. Durch die Anbindung über das Y-Stück wird die thermische Belastung des im Schallerzeuger 3 aufgenommenen Lautsprechers 2 infolge des in der Abgasanlage 4 geführten Abgases gering gehalten. Dies ist erforderlich, da herkömmliche Lautsprecher nur in einem Bereich von bis maximal 200°C arbeiten können, die Temperatur des in der Abgasanlage 4 geführten Abgases aber bis zu zwischen 400°C und 700°C betragen kann. An der Oberschale 32 des Gehäuses ist ein Druckausgleichsventil 36 angeordnet. Das Druckausgleichsventil 36 sorgt dafür, dass ein Druck im Inneren des Gehäuses in etwa gleich einem Druck außerhalb des Gehäuses ist. Um das auf der Oberfläche der Oberschale 32 angeordnete Ventil 36 vor Beschädigungen zu schützen, trägt die Oberschale 32 weiter einen Ring 37 aus Gussmetall, der das Ventil 36 umgibt. Um ein Abfließen von Flüssigkeit aus dem von dem Ring 37 umschlossenen Bereich zu erlauben, weist der Ring 37 unten einen Schlitz auf. Schließlich trägt die Oberschale 32 eine Kabeldurchführung 34, über welche elektrische Leitungen in das Innere des Schallerzeugers 3 geführt werden.

In Figur 1B ist schematisch eine Schnittansicht durch den Schallerzeuger 3 aus Figur 1A gezeigt. Ersichtlich weist der als Tauchspulenlautsprecher ausgebildete Lautsprecher 2 einen Permanentmagneten 21 und eine trichterförmige Membran 22 auf, welche gemeinsam von einem Lautsprecherkorb 23 getragen werden. Dabei ist die Membran 22 radial außen über eine elastische Sicke (nicht gezeigt) mit dem Lautsprecherkorb 23 verbunden und weist radial innen eine Schwingspule (nicht gezeigt) auf, welche in Bohrungen in dem Permanentmagneten 21 geführt wird. Durch Anlegen eines Wechselstroms an die Schwingspule wird aufgrund der Lorentzkraft über die Schwingspule eine Kraft auf die Membran 22 ausgeübt, die diese zum Schwingen veranlasst. Die zum Betrieb der Schwingspule benötigten elektrischen Steuersignale werden durch Leitungen 35 über die Kabeldurchführung 34 in der Oberschale 32 des Gehäuses bereit gestellt. Der Lautsprecherkorb 23 ist radial außen von einem Schalltrichter 42 gehaltert, welcher über ein Verbindungsrohr 41 mit dem Y-Stück 1 verbunden ist. Die Verwendung des Schalltrichters 42 ist erforderlich, da die Fläche der Membran 22 des Lautsprechers 2 größer der Querschnittsfläche der Abgasanlage 4 im Bereich der Einkoppelung des Schalls ist. Die große Fläche der Membran 22 ist erforderlich, um die benötigten Schallflüsse zu erreichen. Die trichterförmige Membran 22 legt eine Symmetrieachse S fest, die mit einem Boden des Schalltrichters 42 einen Winkel von 33° einschließt. Diese Symmetrieachse S steht auf einer Teilungsebene 31, entlang derer die Oberschale 32 und die Unterschale 33 des Gehäuses miteinander verbunden sind, senkrecht. Tatsächlich liegt die elastische Sicke des Lautsprechers 2 in dieser Teilungsebene 31.

Bei dem vorstehend beschriebenen Aufbau ist es nachteilig, dass der Schallerzeuger ein erhebliches Bauvolumen aufweist. Ein solches steht auf Grund zahlreicher restriktiver Bauraumbedingungen im Unterboden eines Fahrzeugs bzw. im die Ansauganlage aufnehmenden Motorraum eines Fahrzeugs nur eingeschränkt zur Verfügung. Da in Systemen zur Beeinflussung von in einer Abgasanlage eines verbrennungsmotorisch betriebenen Fahrzeugs geführten Schallwellen erhebliche Schallflüsse benötigt werden, ist es auch nicht möglich, einfach den Durchmesser des Lautsprechers zu verringern. Vielmehr ist es erforderlich, dass die Fläche der Membran des Lautsprechers größer oder gleich der Querschnittsfläche der Abgasanlage bzw. der Ansauganlage im Bereich der Einkoppelung des Schalls ist. Dies bedingt wiederum die Verwendung eines Schalltrichters als Übergang zwischen der Membran des Lautsprechers und dem Verbindungsstück zur Abgasanlage bzw. Ansauganlage.

Weiter hat sich bei dem vorstehend beschriebenen Aufbau gezeigt, dass der Einbau mühsam ist, und es beim Einbau und beim Betrieb häufig zu einer Beschädigung der Kabeldurchführung und der durchgeführten Leitungen kommt. Schließlich ist das Druckausgleichsventil mit dem dieses umgebenden Ring teuer in der Herstellung, da zahlreiche Arbeitsschritte benötigt werden.

Ein Schallerzeuger mit den Merkmalen des Oberbegriffs des unabhängigen Anspruchs 1 ist aus der DE 10 2009 049 280 A1 bekannt.

Ein Schallerzeuger, welcher eine Oberschale und eine Unterschale aufweist und so einen Innenraum begrenzt, in dem ein Lautsprecher angeordnet ist, ist aus der DE 10 2012 201 725 A1 bekannt. Hier bildet die Unterschale einen Schallleitkanal, der eine Membran des Lautsprechers akustisch mit einem Anschlussstutzen einer Abgasanlage verbindet.

Es ist Aufgabe der vorliegenden Erfindung, einen Schallerzeuger für ein System zur Beeinflussung von Abgasgeräuschen von verbrennungsmotorisch betriebenen Fahrzeugen bereitzustellen, welcher ein kompaktes Bauvolumen aufweist und gleichwohl einen hohen Schallfluss bereitstellt. Zudem soll der Schallerzeuger kostengünstig in der Herstellung und robust in Einbau und Betrieb sein.

Die vorstehende Aufgabe wird durch die Kombination der Merkmale des unabhängigen Anspruchs 1 gelöst. Bevorzugte Weiterbildungen finden sich in den Unteransprüchen.

Ausführungsformen eines Schallerzeugers für ein System zur Beeinflussung von in Abgasanlagen von verbrennungsmotorisch betriebenen Fahrzeugen geführten Schallwellen weisen ein Gehäuse, einen Schalltrichter und einen Lautsprecher auf. Das Gehäuse setzt sich aus einer Oberschale und einer Unterschale zusammensetzt, die insbesondere luftdicht miteinander verbunden sind. Der Schalltrichter wird von der Unterschale des Gehäuses gehaltert und durchdringt dabei eine Wand der Unterschale. Im Bereich der Durchdringung der Unterschale ist der Schalltrichter insbesondere luftdicht mit der Unterschale verbunden. Der Schalltrichter ist ausgebildet, mit der Abgasanlage in Fluidverbindung gebracht zu werden. Der Lautsprecher ist im Inneren des Gehäuses angeordnet und wird von dem Schalltrichter getragen. Die Unterschale des Gehäuses trägt die Oberschale des Gehäuses. Die Unterschale weist wenigstens eine luftdichte Durchführung für eine mit dem Lautsprecher verbundene Steuerleitung und/oder wenigstens ein in einer insbesondere durch Umformen der Unterschale gebildeten Vertiefung angeordnetes Druckausgleichsventil auf.

Somit trägt der Schalltrichter nicht nur den Lautsprecher, sondern über die von ihm durchdrungene Unterschale den Schallerzeuger insgesamt. Indem die Durchführung für die Steuerleitung an der vom Schalltrichter getragenen Unterschale ausgebildet ist, weist diese im Betrieb des Fahrzeugs das selbe Schwingungsverhalten auf, wie der ebenfalls vom Schalltrichter getragene Lautsprecher. In der Folge ist die Beanspruchung der durch die Durchführung geführten Steuerleitungen und damit das Risiko von Störungen herabgesetzt. Indem das Druckausgleichsventil in einer Vertiefung in der Unterschale angeordnet ist, wird es durch die Unterschale selber vor Beschädigung geschützt. Es ist somit nicht mehr erforderlich, einen das Druckausgleichsventil umgebenden (separaten) Ring vorzusehen, wodurch die Herstellungskosten gesenkt werden. Wenn die Unterschale aus Metallblech besteht, kann die Vertiefung leicht durch Umformen der Unterschale oder direkt bei der Formgebung der Unterschale ausgebildet werden. Wenn die Unterschale aus Kunststoff besteht, kann die Vertiefung ebenfalls durch entsprechende Formgebung einer verwendeten Form bereitgestellt werden. Da die Oberschale keinerlei Komponenten des Schallerzeugers trägt (wie beispielsweise die Durchführung für die Steuerleitung), sondern nur dazu dient, die im Gehäuse aufgenommenen Komponenten gegen Einflüsse von außen zu schützen, kann die Oberschale montiert werden, ohne dass hierbei auf Kabeldurchführungen o. ä. geachtet werden muss. Hierdurch wird die Montage vereinfacht.

Es wird betont, dass Unterschale und Schallleiter unterschiedliche Räume umschließen und somit unterschiedliche Elemente sind, selbst in einem Fall in dem Unterschale und Schalltrichter dauerhaft miteinander verbunden oder sogar einstückig ausgebildet sind.

Gemäß einer Ausführungsform ist das wenigstens eine Druckausgleichsventil eine Drossel, die bei einem konstanten Druckunterschied von 4 Millibar (400 Pascal) zwischen den beiden Öffnungen der Drossel einen Durchfluss von größer 3,5 Liter Luft/Stunde und kleiner 10 Liter Luft/ Stunde und insbesondere von größer 4,5 Liter Luft/Stunde und kleiner 9,0 Liter Luft/Stunde und weiter insbesondere von größer 5,0 Liter Luft/Stunde und kleiner 8,5 Liter Luft/ Stunde erlaubt. Dabei wird der konstante Druckunterschied von 4 Millibar nur zur Bestimmung der Durchflussleistung der Drossel verwendet. Im Betrieb des Schallerzeugers ist dieser Druckunterschied nicht konstant.

Gemäß einer Ausführungsform weist der Lautsprecher einen Lautsprecherkorb, eine von dem Lautsprecherkorb gehalterte Membran, einen von dem Lautsprecherkorb gehalterten Permanentmagneten und eine von einem Schwingspulenträger getragene Schwingspule auf. Die Schwingspule ist in einem von dem Permanentmagneten erzeugten magnetischen Gleichfeld angeordnet und mit der Membran verbunden. Die Membran weist eine rotationssymmetrische Form auf.

Gemäß einer Ausführungsform schließt eine Teilungsebene zwischen Oberschale und Unterschale des Gehäuses mit einer Ebene, auf der die Symmetrieachse der Membran senkrecht steht, einen Winkel von größer 3° und kleiner 45° und insbesondere von größer 5° und kleiner 30° und weiter insbesondere von größer 8° und kleiner 15° ein. Somit ist die Teilungsebene, die zwischen der Unterschale und der Oberschale der Membran gebildet ist, gegenüber einer Anordnung des Lautsprechers verkippt. Anders gesagt ist der Lautsprecher nicht in der Teilungsebene angeordnet, sondern wird von dieser unter einem Winkel größer 3° geschnitten. Dies hat zur Folge, dass von der Unterschale aus sowohl die Oberseite als auch die Unterseite des Lautsprechers zugänglich sind, wenn auch an gegenüberliegenden Seiten der Unterschale. Dies erleichtert beispielsweise die Anordnung einer Kabeldurchführung für eine Steuerleitung des Lautsprechers in der Unterschale. Indem der Winkel aber nicht größer als 45° ist, bleibt eine einfache Montage des Lautsprechers in der Unterschale bei geöffneter Oberschale gewährleistet.

Gemäß einer Ausführungsform schließt die Symmetrieachse der Membran mit einem Boden des Schalltrichters einen Winkel von zwischen 35° und 60° und insbesondere von zwischen 38° und 55° und weiter insbesondere von zwischen 40° und 50° ein. In diesem Winkelbereich kann sowohl ein kompakter Aufbau des Schallerzeugers als auch eine gute Führung des vom Lautsprecher erzeugten Schalls in dem Schalltrichter sichergestellt werden.

Gemäß einer Ausführungsform ist der Lautsprecher so an dem Schalltrichter befestigt, dass er einen Innenraum des Schalltrichters luftdicht von einem Innenvolumen des Gehäuses abtrennt. Somit teilt der Lautsprecher einen Innenraum des Gehäuses in einen von der Abgasanlage abgetrennten Teil und einen mit der Abgasanlage (über den Schalltrichter) in Fluidverbindung befindlichen Teil auf. Dabei entspricht das von dem Lautsprecher, dem Schalltrichter (gemeint ist die Außenseite des Schalltrichters) sowie dem Gehäuse abgeschlossene Innenvolumen des Gehäuses dem zwischen dem 10-fachen und dem 100-fachen und insbesondere dem zwischen dem 15-fachen und dem 60-fachen und weiter insbesondere dem zwischen dem 20-fachen und dem 50-fachen des von einer Membran des Lautsprechers maximal verdrängten Luftvolumens. Bei Einhaltung dieser Bedingung ist sichergestellt, dass ein durch die Membran des Lautsprecher von der Abgasanlage abgeschlossenes Innenvolumen einerseits ausreichend groß ist, dass eine unerwünschte zu starke Dämpfung der Membran verhindert wird, und gleichzeitig eine kleine Bauform der Schallerzeugers erzielt wird. Dabei wird unter dem von der Membran maximal verdrängten Luftvolumen dasjenige Luftvolumen verstanden, welches durch die Membran des Lautsprechers bei ordnungsgemäßem (d. h. zerstörungsfreiem) Betrieb des Lautsprechers durch Anlegen eines entsprechenden Steuersignals bewegt werden kann.

Gemäß einer Ausführungsform ist die Membran des Lautsprechers trichterförmig und insbesondere nicht-abwickelbar trichterförmig (NAWI-Membran) oder kugelkalottenförmig, wobei die Spitze bzw. Deckfläche der trichterförmigen Membran oder der Membran mit nichtabwickelbarer Form bzw. der geometrische Mittelpunkt der kugelkalottenförmigen Membran dem Permanentmagneten zugewandt ist. Die Grundfläche der trichterförmigen oder kugelkalottenförmigen Membran oder der Membran mit nicht-abwickelbarer Form ist somit dem Permanentmagneten abgewandt. Nicht-abwickelbare trichterförmige oder kugelkalottenförmige Membranen sind besonders steif und erlauben so eine ganzflächige und gleichmäßige Bewegung der Membran. Alternativ ist aber auch eine konusförmige Membran möglich.

Gemäß einer Ausführungsform ist die Membran luftdicht und über eine luftdichte Sicke mit dem Lautsprecherkorb verbunden. Dies erlaubt es, das Schwingungsverhalten der Membran durch entsprechende Materialwahl und Dimensionierung der Sicke einzustellen. Weiter sind Sicke und Membran gemäß einer Ausführungsform aus unterschiedlichen Materialien gefertigt.

Gemäß einer Ausführungsform trägt der Lautsprecherkorb eine Zentriereinrichtung und insbesondere eine Zentrierspinne, welche mit dem Schwingspulenträger oder im Bereich des Schwingspulenträgers mit der Membran verbunden ist. Es wird betont, dass auf das Vorsehen einer Zentriereinrichtung verzichtet werden kann, wenn eine weitgehend reibungslose Führung der Schwingspule im Permanentmagneten erfolgt.

Gemäß einer Ausführungsform weist der Schalltrichter wenigstens zwei und insbesondere wenigstens drei Vorsprünge auf, die mit der Unterschale des Gehäuses verbindbar sind. Weiter sind zwischen den Vorsprüngen des Schalltrichters und einer Innenwand der Unterschale Öffnungen gebildet, die ein Überströmen von Luft aus der Unterschale des Gehäuses in die Oberschale des Gehäuses erlauben. Auf diese Weise kann ein durch die Membran des Lautsprecher von der Abgasanlage getrenntes geschlossenes Innenvolumen zu einem Teil in der Oberschale und zu einem anderen Teil in der Unterschale angeordnet sein.

Gemäß einer Ausführungsform sind die Oberschale und die Unterschale des Gehäuses miteinander luftdicht verlötet, verschweißt, verbördelt, vernietet, verklebt oder verschraubt.

Gemäß einer Ausführungsform ist die Oberseite des Gehäuses nur an der Unterseite des Gehäuses, nicht aber am Schalltrichter befestigt. Entsprechend ist der Schalltrichter nur an der Unterschale des Gehäuses, nicht aber an der Oberseite des Gehäuses befestigt.

Gemäß einer Ausführungsform weist das Gehäuse insgesamt eine Form auf, die der Form eines schiefen Prismas mit quadratischer Grundfläche und insbesondere eines Parallelepiped angenähert ist, wobei die einander gegenüberliegenden Flächen jedoch in entgegengesetzte Richtungen gekrümmt sind.

Gemäß einer Ausführungsform weisen die Oberschale und die Unterschale jeweils eine Form auf, die der Form eines geraden Prismas mit dreieckiger Grundfläche angenähert ist, wobei die einander gegenüberliegenden Flächen jedoch in entgegengesetzte Richtungen gekrümmt sind.

Da sich nur die Membran und ggf. ein Rand des Lautsprecherkorbes in dem Teil des Gehäuses befinden, welcher Teil sich mit der Abgasanlage in Fluidverbindung befindet, sind auch nur diese Elemente dem heißen und mit korrosiven Chemikalien belasteten Abgas ausgesetzt. Somit müssen neben der Innenwand des Schalltrichters oder des Gehäuses nur diese Elemente aus einem Material gebildet sein, welches dem Abgas und einem evtl. entstehenden Kondensat widerstehen kann. Die übrigen Elemente des Schallerzeugers und insbesondere die empfindliche Schwingspule, welche aufgrund ohmscher Verluste ohnehin einer gewissen Temperaturbelastung ausgesetzt ist, werden hingegen durch die Membran und die Innenwand des Schalltrichters oder des Gehäuses von dem Abgas abgeschirmt. Hierdurch wird auch die Gefahr eines Kurzschlusses der Schwingspule durch entstehendes Kondensat des Abgases der angesaugten Luft verringert.

Gemäß einer Ausführungsform ist der Lautsprecherkorb aus Metall oder Kunststoff gebildet.

Gemäß einer Ausführungsform sind die Oberschale und Unterschale des Gehäuses des Schallerzeugers aus Metallblech oder Kunststoff gebildet. Oberschale und Unterschale des Gehäuses können dabei aus dem gleichen oder aus unterschiedlichen Materialien gebildet sein.

Gemäß einer Ausführungsform sind sowohl die Oberschale und die Unterschale des Gehäuses des Schallerzeugers als auch der Schalltrichter aus einem festen Material gebildet.

Gemäß einer Ausführungsform ist die Membran aus Metall und insbesondere aus Aluminium oder Titan oder aus Kunststoff und insbesondere aus aromatischen Polyamiden gebildet.

Gemäß einer Ausführungsform weist der Permanentmagnet Seltene Erden und insbesondere Neodym auf und ist insbesondere aus einer Neodym-Eisen-Bor Legierung gebildet.

Gemäß einer Ausführungsform ist der Schalltrichter ein von der Oberschale und der Unterschale des Gehäuses unterschiedlicher Körper. Somit ist der Schalltrichter zusätzlich zur Oberschale und der Unterschale des Gehäuses vorgesehen. Damit ist der Schalltrichter von der Oberschale und der Unterschale des Gehäuses unterscheidbar. Zumindest ein Teil des Schalltrichters ist im Inneren des Gehäuses angeordnet. Gemäß einer Ausführungsform ist der Schalltrichter dauerhaft an der Unterschale des Gehäuses befestigt.

Gemäß einer Ausführungsform wird der Schalltrichter von einer Leitung gebildet, welche den Schallerzeuger mit der Abgasanlage verbindet.

Ausführungsformen eines Systems zur Beeinflussung von in Abgasanlagen von verbrennungsmotorisch betriebenen Fahrzeugen geführten Schallwellen weisen eine Steuerung und wenigstens einen Schallerzeuger wie vorstehend beschrieben auf. Dabei ist der Lautsprecher und insbesondere die Schwingspule des Lautsprechers des wenigstens einen Schallerzeugers elektrisch mit der Steuerung verbunden. Die Steuerung ist ausgebildet, ein Steuersignal zu erzeugen und an den Lautsprecher und insbesondere die Schwingspule des Lautsprechers des wenigstens einen Schallerzeugers auszugeben. Das Steuersignal ist geeignet, Schall im Inneren der Abgasanlage zumindest teilweise und bevorzugt vollständig in Betrag und Phase auszulöschen, wenn der Lautsprecher und insbesondere die Schwingspule des Lautsprechers mit diesem Steuersignal betrieben wird.

Ausführungsformen eines Kraftfahrzeugs weisen einen Verbrennungsmotor mit einer Motorsteuerung, eine mit dem Verbrennungsmotor in Fluidverbindung stehende Abgasanlage und das vorstehend beschriebene System auf. Dabei steht der wenigstens eine Schallerzeuger des Systems mit der Abgasanlage in Fluidverbindung. Weiter ist die Steuerung des Systems mit der Motorsteuerung des Verbrennungsmotors des Fahrzeugs verbunden. Indem die Steuerung des Systems mit der Motorsteuerung verbunden ist, kann die Steuerung von der Motorsteuerung ausgegebene Werte wie beispielsweise Drehzahl oder Drehmoment berücksichtigen, wenn sie das Steuersignal für den Lautsprecher erzeugt.

Weiter wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z. B. Verfahrensschritten, Einrichtungen, Bereichen, Größen und dergleichen aufzufassen sind, und in keiner Weise das Vorhandensein anderer oder zusätzlicher Merkmale oder Gruppierungen von anderen oder zusätzlichen Merkmalen ausschließen.

Weitere Merkmale der Erfindung ergeben sich aus der nachfolgenden Beschreibung von Ausführungsbeispielen in Verbindung mit den Ansprüchen sowie den Figuren. In den Figuren werden gleiche bzw. ähnliche Elemente mit gleichen bzw. ähnlichen Bezugszeichen bezeichnet. Es wird darauf hingewiesen, dass die Erfindung nicht auf die Ausführungsformen der beschriebenen Ausführungsbeispiele beschränkt, sondern durch den Umfang der beiliegenden Patentansprüche bestimmt ist. Insbesondere können die einzelnen Merkmale bei erfindungsgemäßen Ausführungsformen in anderer Anzahl und Kombination als bei den untenstehend angeführten Beispielen verwirklicht sein. Bei der nachfolgenden Erläuterung einiger Ausführungsbeispiele der Erfindung wird auf die beiliegenden Figuren Bezug genommen, von denen
- Figur 1A: schematisch eine perspektivische Ansicht eines Schallerzeugers eines Systems zur Beeinflussung von in Abgasanlagen von verbrennungsmotorisch betriebenen Fahrzeugen geführten Schallwellen nach dem Stand der Technik zeigt;
- Figur 1B: schematisch einen Querschnitt durch den Schallerzeuger aus Figur 1A zeigt;
- Figur 2A: schematisch einen Querschnitt durch einen Schallerzeuger eines Systems zur Beeinflussung von in Abgasanlagen von verbrennungsmotorisch betriebenen Fahrzeugen geführten Schallwellen gemäß einer Ausführungsform der Erfindung zeigt;
- Figur 2B: schematisch eine teilweise transparente perspektivische Ansicht des Schallerzeugers aus Figur 2A zeigt;
- Figur 3: schematisch ein Blockdiagramm eines Systems zur Beeinflussung von in Abgasanlagen von verbrennungsmotorisch betriebenen Fahrzeugen geführten Schallwellen gemäß einer Ausführungsform der Erfindung zeigt; und
- Figur 4: schematisch ein Kraftfahrzeug zeigt, in welches das System aus Figur 3 integriert ist.

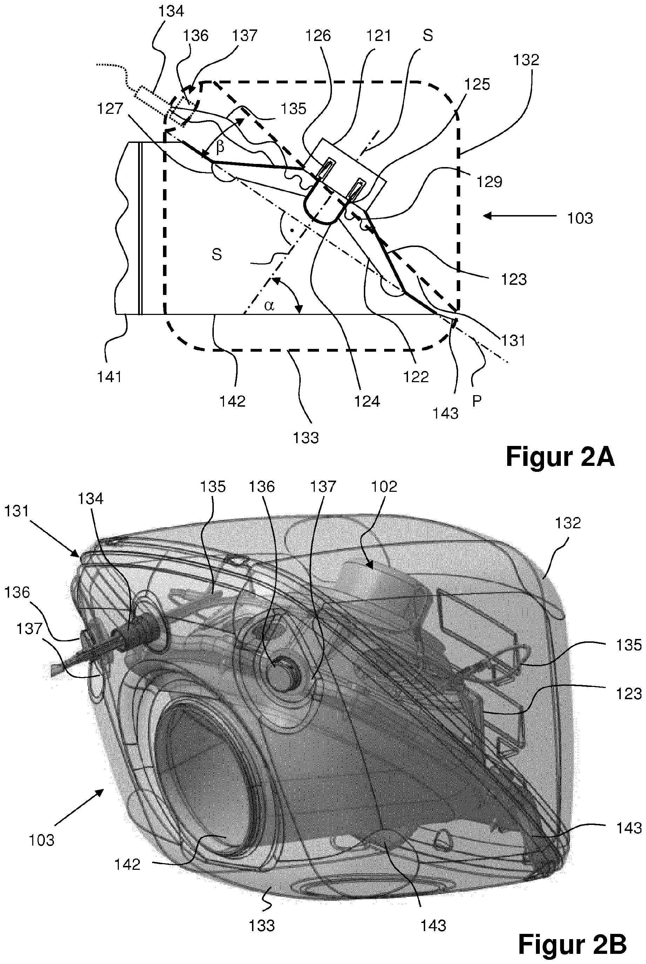

Im Folgenden wird unter Bezugnahme auf die Figuren 2A und 2B ein Schallerzeuger gemäß einer Ausführungsform der Erfindung beschrieben. Dabei zeigt Figur 2A eine schematische Schnittansicht durch den Schallerzeuger 103 und Figur 2B eine perspektivische Ansicht auf den selben Schallerzeuger 103. In Figur 2B ist das aus Unterschale 133 und Oberschale 132 gebildete Gehäuse des Schallerzeugers 103 transparent dargestellt.

Die Unterschale 133 und die Oberschale 132, welche das Gehäuse des Schallerzeugers 103 bilden, sind in der gezeigten Ausführungsform aus Metallblech gebildet und in montiertem Zustand luftdicht aneinander befestigt. Dabei weisen die Unterschale 133 und die Oberschale 132 jeweils unterschiedliche Formen auf, die aber beide der Form eines geraden Prismas mit dreieckiger Grundfläche angenähert sind. Insgesamt weist das Gehäuse eine Form auf, die der Form eines Parallelepiped angenähert ist, wobei die einander gegenüberliegenden Flächen des Parallelepiped jedoch in entgegengesetzte Richtungen gekrümmt sind.

Eine Seitenwand der Unterschale wird von einem Schalltrichter 142 durchdrungen, welche über eine Schallleitung 141 mit einer Abgasanlage verbunden ist. An dem Bereich der Durchdringung ist der Schalltrichter 142 luftdicht gegen die Unterschale 133 abgedichtet. Der Schalltrichter 142 ist im Inneren der Unterschale 133 zusätzlich über drei Vorsprünge 143 gegen die Unterschale 133 abgestützt. Diese drei Vorsprünge 143 des Schalltrichters 142 sind in einer Teilungsebene 102 zwischen der Oberschale 132 und der Unterschale 133 so angeordnet, dass zwischen dem Schalltrichter 142 und einer Innenwand der Unterschale 133 und Oberschale 132 Öffnungen verbleiben, über welche im Inneren des Schallerzeugers Luft von der Unterschale 133 in die Oberschale 132 strömen kann.

Der Schalltrichter 142 ist luftdicht mit einem aus Stahlblech gebildeten Lautsprecherkorb 123 eines Tauchspulenlautsprechers 102 verbunden.

Der Lautsprecher 102 weist einen Permanentmagneten 121 aus Neodym-Eisen-Bor Legierung und eine nicht-abwickelbare trichterförmige Membran 122 aus Kunststoff auf, welche gemeinsam von dem Lautsprecherkorb 123 getragen werden. Dabei ist die trichterförmige Membran 122 an ihrer Grundfläche radial außen über eine elastische Sicke 127 aus Kunststoff luftdicht mit dem Lautsprecherkorb 123 verbunden. Die Deckfläche der trichterförmigen Membran 122 ist mittig durch eine Abdeckkappe 124 aus Kunststoff luftdicht verschlossen.

Somit trennt der Lautsprecher 102 eine im Schallerzeuger 103 angeordnete Öffnung des Schalltrichters 142 luftdicht gegen ein von der Oberschale 132 und Unterschale 133 umschlossenes Volumen ab. Folglich teilt der Lautsprecher 102 zusammen mit dem Schalltrichter 142 den Innenraum des Schallerzeugers 103 in zwei voneinander hermetisch getrennte Teile, von denen ein Teil über die Schalleitung 141 mit einer Abgasanlage in Fluidverbindung bringbar ist, und der andere Teil von der Abgasanlage durch die Membran 122 des Lautsprechers 102 getrennt ist. Dabei sind die Oberschale 133 und die Unterschale 134 so dimensioniert, dass der von der Abgasanlage durch die Membran 122 des Lautsprechers 102 getrennte Teil und damit das abgeschlossene Innenvolumen des Schallerzeugers 103 dem 32-fachen des von der Membran 122 des Lautsprechers 102 bei maximalem Ausschlag der Membran 122 verdrängten Luftvolumens entspricht. In der gezeigten Ausführungsform beträgt das abgeschlossene Innenvolumen des Schallerzeugers 103 rund 5696 cm³ und das bei maximalem Ausschlag der Membran 122 verdrängte Luftvolumen rund 178 cm³.

Um einen Druckausgleich dieses abgeschlossenen Volumens zu ermöglichen, weist die Unterschale 133 zwei Druckausgleichsventile 136 in Form von Drosseln auf, die in Ausnehmungen 137 angeordnet sind, die in die Unterschale 133 eingeformt sind. Die Druckausgleichsventile 136 erlauben bei einem konstanten Druckunterschied von 4 Millibar (400 Pascal) zwischen ihren jeweiligen Ein- und Auslässen einen Durchfluss von 7,0 Liter Luft/Stunde und sind damit zu träge, um auf Luftdruckschwankungen zu reagieren, die im Inneren des Schallerzeugers 103 durch ein Schwingen der Membran 122 des Lautsprechers 102 hervorgerufen werden. Es wird betont, dass dieser konstante Druckunterschied nur zur Bestimmung des Durchflusses der Druckausgleichsventile verwendet wird; im Betrieb schwankt der Druckunterschied hingegen und wird von den Druckausgleichsventilen kontinuierlich abgebaut. Durch die Anordnung in den Ausnehmungen sind die Druckausgleichsventile 136 gegen Beschädigung geschützt. Gleichzeitig sind die Ausnehmungen so orientiert, dass Wasser nach unten ablaufen kann.

Im Bereich der Abdeckkappe 124 ist an der Membran 122 ein Schwingspulenträger 125 befestigt, welcher eine Schwingspule 126 trägt. Die Schwingspule 126 ist in einem von dem Permanentmagneten 121 erzeugten magnetischen Gleichfeld angeordnet. Hierfür weist der Permanentmagnet 121 entsprechende Ausnehmungen auf. Über eine Zentrierspinne 129 wird die Schwingspule 126 radial in der Ausnehmung fixiert. Durch Anlegen eines Wechselstroms an die Schwingspule 126, wird über die Schwingspule 126 aufgrund der Lorentzkraft eine Kraft auf die Membran 122 ausgeübt, die diese zum Schwingen veranlasst. Die Schwingspule 126 wird über Steuerleitungen 135 mit Strom versorgt, die über eine luftdichte Kabeldurchführung 134 an der Unterschale 133 in das Innere des Schallerzeugers 103 eingeführt sind.

Um an der Unterschale 133 oberhalb des Lautsprecherkorbes 123 genug Raum für die Anordnung der Druckausgleichsventile 136 und der Kabeldurchführung 134 bereitzustellen, ist der Lautsprecher 102 nicht in der Teilungsebene 131 zwischen der Oberschale 132 und der Unterschale 133 angeordnet, sondern gegenüber dieser Teilungsebene 131 geneigt. Konkret schließt eine Ebene P, die auf einer von der Membran 122 festgelegten Symmetrieachse S senkrecht steht, mit der Teilungsebene 131 in der gezeigten Ausführungsform einen Winkel β von 12° ein. Gleichzeitig schließt die Symmetrieachse S mit einem Boden des Schalltrichters 142 einen Winkel α von 35° ein.

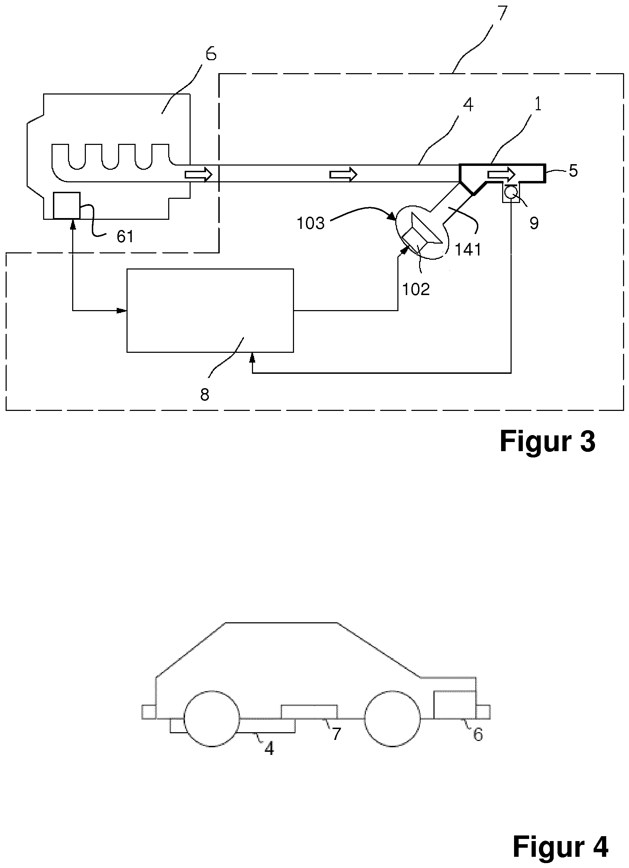

In Figur 3 ist schematisch ein System 7 zur Beeinflussung von in Abgasanlagen von verbrennungsmotorisch betriebenen Fahrzeugen geführten Schallwellen gezeigt, welches den vorstehend beschriebenen Schallerzeuger 103 verwendet.

Der Schallerzeuger 103 ist im Bereich einer Mündung 5 über ein Y-Stück 1 und eine Schallleitung 141 an eine Abgasanlage 4 eines Fahrzeugs angebunden. Über die Mündung 5 wird in der Abgasanlage 4 geführtes Abgas gemeinsam mit in dem Schallerzeuger 103 erzeugten Schall nach außen abgegeben.

An dem Y-Stück 1 ist ein Fehlermikrofon 9 in Form eines Drucksensors vorgesehen. Das Fehlermikrofon 9 misst Druckschwankungen und damit Schall im Inneren des Y-Stücks 1 in einem Abschnitt stromabwärts eines Bereichs, in dem die fluide Anbindung zwischen Abgasanlage 9 und Schallerzeuger 103 erfolgt. Es wird jedoch betont, dass das Fehlermikrofon 9 nur optional ist.

Die Strömungsrichtung des in der Abgasanlage 4 geführten Abgases ist durch Pfeile dargestellt.

Der Lautsprecher 102 des Schallerzeugers 103 und das Fehlermikrofon 9 sind elektrisch mit einer Steuerung 8 verbunden. Die Steuerung 8 ist über einen CAN-Bus mit einer Motorsteuerung 61 eines Verbrennungsmotors 6 verbunden. Es wird betont, dass die vorliegende Erfindung nicht auf einen CAN-Bus beschränkt ist.

Die Abgasanlage 4 kann weiter wenigstens einen zwischen dem Verbrennungsmotor 6 und dem Y-Stück 1 angeordneten Katalysator (nicht gezeigt) zur Reinigung des von dem Verbrennungsmotor 6 emittierten und in der Abgasanlage 4 geführten Abgases aufweisen.

Die allgemeine Funktionsweise des vorstehenden Systems 7 zur Beeinflussung von in Abgasanlagen von verbrennungsmotorisch betriebenen Fahrzeugen geführten Schallwellen ist wie folgt:
Anhand von durch das Fehlermikrofon 9 gemessenem Schall und/oder von über den CAN-Bus empfangenen Betriebsparametern des Verbrennungsmotors 6 berechnet die Steuerung 8 unter Verwendung eines *Filtered-x Least mean squares* (FxLMS) Algorithmus Steuersignale, welche jeweils eine gewünschte Beeinflussung des im Inneren der Abgasanlage 4 geführten, auf den Betrieb des Verbrennungsmotors 6 zurückzuführenden Schalls durch Beaufschlagung mit künstlich durch den Schallerzeuger 103 erzeugtem Schall erlauben, und gibt diese Steuersignale über die Steuerleitungen 135 an den Lautsprecher 102 des Schallerzeugers 103 aus.

In der Figur 4 ist schematisch ein Kraftfahrzeug mit einem Verbrennungsmotor 6, einer Abgasanlage 4 und dem vorstehend beschriebenen System 7 zur Beeinflussung von in Abgasanlagen von verbrennungsmotorisch betriebenen Fahrzeugen geführten Schallwellen gezeigt. Die Schallerzeuger und die Lautsprecher des Antischall-Systems sind in Figur 6 nicht eigens gezeigt.

In den Figuren sind im Interesse einer übersichtlichen Darstellung nur diejenigen Elemente, Komponenten und Funktionen dargestellt, die einem Verständnis der vorliegenden Erfindung förderlich sind. Ausführungsformen der Erfindung sind jedoch nicht auf die dargestellten Elemente, Komponenten und Funktionen beschränkt, sondern enthalten weitere Elemente, Komponenten und Funktionen, soweit sie für ihre Verwendung oder ihren Funktionsumfang erforderlich sind.

## Patentansprüche

1. Schallerzeuger (103) für ein System zur Beeinflussung von in Abgasanlagen von verbrennungsmotorisch betriebenen Fahrzeugen geführten Schallwellen, aufweisend:
ein Gehäuse, welches sich aus einer Oberschale (132) und einer Unterschale (133) zusammensetzt;
einen von der Unterschale (133) des Gehäuses gehalterten Schalltrichter (142), der die Unterschale (133) durchdringt und mit der Abgasanlage in Fluidverbindung bringbar ist; und
einen in dem Gehäuse angeordneten und von dem Schalltrichter (142) getragenen Lautsprecher (102); und
wobei die Unterschale (133) des Gehäuses die Oberschale (132) des Gehäuses trägt;
**dadurch gekennzeichnet, dass** die Unterschale (133) wenigstens eine luftdichte Durchführung (134) für eine mit dem Lautsprecher (102) verbundene Steuerleitung (135) und/oder wenigstens ein in einer Vertiefung (137) angeordnetes Druckausgleichsventil (136) aufweist.

2. Schallerzeuger (103) nach Anspruch 1, wobei das wenigstens ein Druckausgleichsventil (136) eine Drossel ist, die bei einem konstanten Druckunterschied von 400 Pa einen Durchfluss von größer 3,5 Liter Luft/Stunde und kleiner 10 Liter Luft/Stunde und insbesondere von größer 4,5 Liter Luft/Stunde und kleiner 9,0 Liter Luft/Stunde und weiter insbesondere von größer 5,0 Liter Luft/Stunde und kleiner 8,5 Liter Luft/Stunde erlaubt.

3. Schallerzeuger (103) nach Anspruch 1 oder 2,
wobei der Lautsprecher (102) einen Lautsprecherkorb (123), eine von dem Lautsprecherkorb (123) gehalterte Membran (122), einen von dem Lautsprecherkorb (123) gehalterten Permanentmagneten (121) und eine von einem Schwingspulenträger (125) getragene Schwingspule (126), aufweist, welche Schwingspule (126) in einem von dem Permanentmagneten (121) erzeugten magnetischen Gleichfeld angeordnet und mit der Membran (122) verbunden ist; und
wobei die Membran (122) eine rotationssymmetrische Form aufweist.

4. Schallerzeuger (103) nach Anspruch 3, wobei eine Teilungsebene (131) zwischen Oberschale (132) und Unterschale (133) des Gehäuses mit einer Ebene (P), auf der die Symmetrieachse (S) der Membran (122) senkrecht steht, einen Winkel (β) von größer 3° und kleiner 45° und insbesondere von größer 5° und kleiner 30° und weiter insbesondere von größer 8° und kleiner 15° einschließt.

5. Schallerzeuger (103) nach einem der Ansprüche 3 oder 4, wobei die Symmetrieachse (S) der Membran (122) mit einem Boden des Schalltrichters (142) einen Winkel (α) von zwischen 35° und 60° und insbesondere von zwischen 38° und 55° und weiter insbesondere von zwischen 40° und 50° einschließt.

6. Schallerzeuger (103) nach einem der Ansprüche 1 bis 5,
wobei der Lautsprecher (102) so an dem Schalltrichter (142) befestigt ist, dass er einen Innenraum des Schalltrichters (142) luftdicht von einem Innenvolumen des Gehäuses abtrennt; und
wobei das von dem Lautsprecher (102), dem Schalltrichter (142) sowie dem Gehäuse abgeschlossene Innenvolumen des Gehäuses zwischen dem 10-fachen und dem 100-fachen und insbesondere zwischen dem 15-fachen und dem 60-fachen und weiter insbesondere zwischen dem 20-fachen und dem 50-fachen des von einer Membran (122) des Lautsprechers (102) maximal verdrängten Luftvolumens entspricht.

7. Schallerzeuger (103) nach einem der Ansprüche 3 bis 5,
wobei die Membran trichterförmig oder kugelkalottenförmig ist, oder eine nichtabwickelbare Form aufweist wobei die Spitze bzw. Deckfläche der trichterförmigen Membran oder der Membran mit nichtabwickelbarer Form bzw. der geometrische Mittelpunkt der kugelkalottenförmigen Membran dem Permanentmagneten zugewandt ist; und
wobei die Membran (122) über eine luftdichte Sicke (127) mit dem Lautsprecherkorb (123) verbunden ist.

8. Schallerzeuger (103) nach einem der Ansprüche 1 bis 7,
wobei der Schalltrichter (142) wenigstens zwei und insbesondere wenigstens drei Vorsprünge (143) aufweist, die mit der Unterschale (133) des Gehäuses verbunden sind; und
wobei zwischen den Vorsprüngen (143) des Schalltrichters (142) Öffnungen gebildet sind, die ein Überströmen von Luft aus der Unterschale (133) des Gehäuses in die Oberschale (132) des Gehäuses erlauben.

9. Schallerzeuger (103) nach einem der Ansprüche 1 bis 8, wobei der Schalltrichter ein von der Oberschale und der Unterschale des Gehäuses unterschiedlicher Körper ist, der zusätzlich zu der Oberschale und der Unterschale des Gehäuses vorhanden ist.

10. System (7) zur Beeinflussung von in Abgasanlagen von verbrennungsmotorisch betriebenen Fahrzeugen geführten Schallwellen, aufweisend:
eine Steuerung (8); und
wenigstens einen Schallerzeuger (103) nach einem der Ansprüche 1 bis 9, wobei der wenigstens eine Lautsprecher (102) des wenigstens einen Schallerzeugers (103) mit der Steuerung (8) verbunden ist;
wobei die Steuerung (8) ausgebildet ist, wenigstens ein Steuersignal zu erzeugen und an den wenigstens einen Lautsprecher (102) auszugeben, wobei das Steuersignal geeignet ist, Schall im Inneren der Abgasanlage (4) zumindest teilweise und bevorzugt vollständig auszulöschen, wenn der wenigstens eine Lautsprecher (102) mit diesem Steuersignal betrieben wird.

11. Kraftfahrzeug aufweisend:
einen Verbrennungsmotor (6) mit einer Motorsteuerung (61);
eine Abgasanlage (4), die mit dem Verbrennungsmotor (6) in Fluidverbindung steht; und
ein System (7) nach Anspruch 10,
wobei der wenigstens eine Schallerzeuger (103) des Systems (7) mit der Abgasanlage (4) in Fluidverbindung steht; und
wobei die Steuerung (8) des Systems (7) mit der Motorsteuerung (61) des Verbrennungsmotors (6) des Fahrzeugs verbunden ist.

## Claims

1. A sound generator (103) for a system for influencing sound waves propagating through exhaust systems of vehicles driven by internal combustion engines, comprising:
an enclosure being comprised of an upper shell (132) and a lower shell (133);
a bell mouth (142) that is supported by the lower shell (133) of the enclosure, penetrates the lower shell (133), and is configured for a fluid communication with the exhaust system; and
a loudspeaker (102) disposed in the enclosure and supported by the bell mouth (142); and
wherein the lower shell (133) of the enclosure supports the upper shell (132) of the enclosure;
**characterized in that** the lower shell (133) comprises at one air-tight feed-through (134) for a control line (135) connected to the loudspeaker (102) and/or at least one pressure equalization valve (136) located in a dimple (137).

2. The sound generator (103) of claim 1, wherein the at least on pressure equalization valve (136) is a throttle valve enabling a flow rate of more than 3.5 liters of air per hour and less than 10 liters of air per hour, and in particular of more than 4.5 liters of air per hour and less than 9.0 liters of air per hour, and further in particular of more than 5.0 liters of air per hour and less than 8.5 liters of air per hour for a constant pressure difference of 400 Pascal.

3. The sound generator (103) of claim 1 or claim 2,
wherein the loudspeaker (102) comprises a loudspeaker basket (123), a membrane (122) supported by the loudspeaker basket (123), a permanent magnet (121) supported by the loudspeaker basket (123), and a voice coil (126) supported by a voice coil carrier (125), the voice coil (126) being disposed in a constant magnetic field created by the permanent magnet (121) and being coupled to the membrane (122), and
wherein the membrane (122) has a rotationally symmetric shape.

4. The sound generator (103) of claim 3, wherein a parting plane (131) between the enclosure's upper shell (132) and lower shell (133) forms with the plane (P) perpendicular to the axis (S) of symmetry of the membrane (122) an angle (β) of more than 3° and less than 45°, and in particular of more than 5° and less than 30°, and further in particular of more than 8° and less than 15°.

5. The sound generator (103) of one claims 3 or 4, wherein the axis (S) of symmetry of the membrane (122) forms an angle (α) with a bottom of the bell mouth (142) of between 35° and 60°, and in particular of between 38° and 55°, and further in particular between 40° and 50°.

6. The sound generator (103) of one of claims 1 to 5,
wherein the loudspeaker (102) is attached to the bell mouth (142) such that it separates an internal volume of the bell mouth (142) from an internal volume of the enclosure in an air-tight manner; and
wherein the internal volume of the enclosure which is enclosed by the loudspeaker (102), the bell mouth (142), and the enclosure, corresponds to the 10-fold to 100-fold, and in particular to the 15-fold to 60-fold, and further in particular to the 20-fold to 50-fold of the air volume being at a max displaced by a membrane (122) of the loudspeaker (102).

7. The sound generator (103) of one of claims 3 to 5,
wherein the membrane of the loudspeaker is funnel-like or dome-like, or has a non-developable shape, with the top or top face of the funnel-like membrane or the membrane with the non-developable shape or the geometric centre of the dome-like membrane facing towards the permanent magnet; and
wherein the membrane (122) is coupled to the loudspeaker basket (123) by an air-tight surround (127).

8. The sound generator (103) of one claims 1 to 7,
wherein the bell mouth (142) comprises at least two, and in particular at least three protrusions (143) connected to the lower shell (133) of the enclosure; and wherein openings are formed between the protrusions (143) of the bell mouth (142) enabling air to flow from the lower shell (133) of the enclosure into the upper shell (132) of the enclosure.

9. The sound generator (103) of one claims 1 to 8, wherein the bell mouth is an element different from the upper shell and the lower shell of the enclosure and provided in addition to the upper shell and lower shell of the enclosure.

10. A system (7) for influencing sound waves propagating through exhaust systems of vehicles driven by internal combustion engines, comprising:
a controller (8); and
at least one sound generator (103) according to one of claims 1 to 9, wherein the at least loudspeaker (102) of the at least one sound generator (103) is connected to the controller (8);
wherein the controller (8) is configured to generate at least one control signal and to output the control signal to the at least one loudspeaker (102), with the control signal being adapted to cancel sound inside the exhaust system (4) at least partially or preferably completely upon the at least one loudspeaker (102) being operated with said control signal.

11. A motor vehicle comprising:
an internal combustion engine (6) having an engine control unit (61);
an exhaust system (4) in fluid communication with the internal combustion engine (6); and
a system (7) according to claim 10;
wherein the at least one sound generator (103) of the system (7) is in fluid communication with the exhaust system (4); and
wherein the controller (8) of the system (7) is further connected to the engine control unit (61) of the internal combustion engine (6) of the vehicle.

## Revendications

1. Générateur acoustique (103) pour un système servant à agir sur des ondes acoustiques acheminées dans des systèmes d'échappement de véhicules fonctionnant avec un moteur à combustion interne, présentant :
un boîtier, qui se compose d'une coque supérieure (132) et d'une coque inférieure (133) ;
un pavillon (142) maintenu par la coque inférieure (133) du boîtier, qui traverse la coque inférieure (133) et qui peut être amené en communication fluidique avec le système d'échappement ; et
un haut-parleur (102) disposé dans le boîtier et supporté par le pavillon (142) ; et
dans lequel la coque inférieure (133) du boîtier supporte la coque supérieure (132) du boîtier ;
**caractérisé en ce que** la coque inférieure (133) présente au moins un passage (134) étanche à l'air pour un conduit de commande (135) relié au haut-parleur (102) et/ou au moins une vanne de compensation de pression (136) disposée dans un renfoncement (137).

2. Générateur acoustique (103) selon la revendication 1, dans lequel l'au moins une vanne de compensation de pression (136) est un goulot d'étranglement, qui permet, à une pression différentielle constante de 400 Pa, un débit supérieur à 3,5 litres d'air par heure et inférieur à 10 litres d'air par heure, et en particulier supérieur à 4,5 litres d'air par heure et inférieur à 9,0 litres d'air par heure, et encore en particulier supérieur à 5,0 litres d'air par heure et inférieur à 8,5 litres d'air par heure.

3. Générateur acoustique (103) selon la revendication 1 ou 2,
dans lequel le haut-parleur (102) présente un saladier de haut-parleur (123), une membrane (122) maintenue par le saladier de haut-parleur (123), un aimant permanent (121) maintenu par le saladier de haut-parleur (123) et une bobine acoustique (126) supportée par un support de bobines acoustiques (125), laquelle bobine acoustique (126) est disposée dans un champ continu magnétique produit par l'aimant permanent (121) et est reliée à la membrane (122) ; et
dans lequel la membrane (122) présente une forme symétrique en rotation.

4. Générateur acoustique (103) selon la revendication 3, dans lequel un plan de division (131) entre la coque supérieure (132) et la coque inférieure (133) du boîtier forme avec un plan (P), sur lequel l'axe de symétrique (S) de la membrane (122) est perpendiculaire, un angle (ß) supérieur à 3° et inférieur à 45°, et en particulier supérieur à 5° et inférieur à 30°, et par ailleurs en particulier supérieur à 8° et inférieur à 15°.

5. Générateur acoustique (103) selon l'une quelconque des revendications 3 ou 4,
dans lequel l'axe de symétrie (S) de la membrane (122) forme, avec un fond du pavillon (142), un angle (α) compris entre 35° et 60°, et en particulier compris entre 38° et 55°, et par ailleurs en particulier compris entre 40° et 50°.

6. Générateur acoustique (103) selon l'une quelconque des revendications 1 à 5,
dans lequel le haut-parleur (102) est fixé sur le pavillon (142) de telle sorte qu'il isole un espace intérieur du pavillon (142) de manière étanche à l'air d'un volume intérieur du boîtier ; et
dans lequel le volume intérieur du boîtier fermé par le haut-parleur (102), le pavillon (142) ainsi que par le boîtier correspond à entre 10 fois et 100 fois, et en particulier entre 15 fois et 60 fois, et par ailleurs en particulier entre 20 fois et 50 fois le volume d'air refoulé au maximum par une membrane (122) du haut-parleur (102).

7. Générateur acoustique (103) selon l'une quelconque des revendications 3 à 5,
dans lequel la membrane présente une forme d'entonnoir ou de calotte sphérique, ou présente une forme ne pouvant être déroulée, dans lequel la pointe ou la surface supérieure de la membrane en forme d'entonnoir ou de la membrane présentant une forme ne pouvant être déroulée ou le centre géométrique de la membrane en forme de calotte sphérique est tournée/tourné vers l'aimant permanent ; et
dans lequel la membrane (122) est reliée, par l'intermédiaire d'une nervure (127) étanche à l'air, au saladier de haut-parleur (123).

8. Générateur acoustique (103) selon l'une quelconque des revendications 1 à 7,
dans lequel le pavillon (142) présente au moins deux et en particulier au moins trois saillies (143), qui sont reliées à la coque inférieure (133) du boîtier ; et
dans lequel des ouvertures sont formées entre les saillies (143) du pavillon (142), lesquelles permettent un écoulement d'air depuis la coque inférieure (133) du boîtier dans la coque supérieure (132) du boîtier.

9. Générateur acoustique (103) selon l'une quelconque des revendications 1 à 8,
dans lequel le pavillon est un corps différent de la coque supérieure et de la coque inférieure du boîtier, lequel est présent en supplément de la coque supérieure et de la coque inférieure du boîtier.

10. Système (7) servant à agir sur des ondes acoustiques acheminées dans des systèmes d'échappement de véhicules fonctionnant avec un moteur à combustion interne, présentant :
une commande (8) ; et
au moins un générateur acoustique (103) selon l'une quelconque des revendications 1 à 9, dans lequel l'au moins un haut-parleur (102) de l'au moins un générateur acoustique (103) est relié à la commande (8) ;
dans lequel la commande (8) est réalisée afin de produire au moins un signal de commande et de le délivrer à l'au moins un haut-parleur (102), dans lequel le signal de commande est approprié pour éliminer le bruit à l'intérieur du système d'échappement (4) au moins en partie et de manière préférée en totalité quand l'au moins haut-parleur (102) fonctionne avec ledit signal de commande.

11. Véhicule automobile présentant :
un moteur à combustion interne (6) comprenant une commande de moteur (61);
un système d'échappement (4), qui est en communication fluidique avec le moteur à combustion interne (6) ; et
un système (7) selon la revendication 10,
dans lequel l'au moins un générateur acoustique (103) du système (7) est en communication fluidique avec le système d'échappement (4) ; et
dans lequel la commande (8) du système (7) est reliée à la commande de moteur (61) du moteur à combustion interne (6) du véhicule.
